# EUROPÄISCHE PATENTSCHRIFT

(11) **EP 2 708 451 B1**
(45) Veröffentlichungstag und Bekanntmachung des Hinweises auf die Patenterteilung: **15.01.2020**
(21) Anmeldenummer: 13003534.8
(22) Anmeldetag: 12.07.2013
(51) Int. Cl.: B62D 35/00

(54) **Auflieger Windleitelement**
Trailer spoiler
Déflecteur pour train routier

(30) Priorität: 13.09.2012 DE 102012018053
(43) Veröffentlichungstag der Anmeldung: 19.03.2014
(73) Patentinhaber: Fahrzeugwerk Bernard Krone GmbH, 48480 Spelle (DE)
(72) Erfinder: Baufeld, Torsten, 49757 Werlte (DE); Sasse, Uwe, 49716 Meppen (DE)
(74) Vertreter: Pott, Ulrich

(56) Entgegenhaltungen:
- EP-A2- 1 870 320
- DE-U1- 29 623 407
- US-A- 4 311 334
- US-A1- 2009 230 726
- US-A1- 2010 072 779

## Beschreibung

Die Erfindung bezieht sich auf einen Sattelzug mit einer ein Fahrerhaus aufweisenden Zugmaschine und einem mit der Zugmaschine verbindbaren, einen Aufbau aufweisenden Auflieger, wobei zwischen dem Fahrerhaus und dem Auflieger eine Windleiteinrichtung vorgesehen ist, mittels welcher ein Zwischenraum zwischen dem Fahrerhaus der Zugmaschine des Sattelzuges und dem Auflieger des Sattelzuges zumindest bereichsweise abdeckbar ist, wobei der Auflieger in seinem dem Fahrerhaus des Sattelzuges zugewandten vorderen Bereich seine beiden Längsseiten im Wesentlichen fortsetzende Aufliegerwindleitelemente aufweist, welche von einem Windleitelement des Fahrerhauses überlappt sind.

Aufgrund von grundsätzlichen Kompatibilitätsanforderungen bei einem Sattelzug ist zwischen Sattelzugmaschine und dem angehängten Auflieger (Trailer) ein relativ großer Spalt zwischen ziehendem und gezogenem Fahrzeug kaum zu vermeiden. In diesem Spalt entstehen Verwirbelungen, die wesentlichen Anteil am gesamten Luftwiderstand des Sattelzuges, also der Fahrzeuggesamtkombination haben. Dieser Einfluss auf den Gesamtluftwiderstand dieser Fahrzeugkombination kann mehr als 4 % betragen. Dieser wirkt sich sehr nachteilig auf die Gesamtbetriebskosten aufgrund des erhöhten Energieverbrauches aus. Des Weiteren entsteht in dem Spalt eine Unterdruckzone, was durch die dadurch bedingten Wirbelungen im weiteren Verlauf des Sattelzuges nach hinten hin zu einer erhöhten Reibung führt, was sich wiederum auf den Luftwiderstand negativ auswirkt. Der Spalt zwischen Zugmaschine und Auflieger wird allerdings bislang konstruktiv als notwendig angesehen, da sowohl die Sattelzugmaschine als auch der Auflieger, also der Sattelanhänger, für eine optimale Raumausnutzung möglichst quaderförmig ausgeführt werden.

Es ist bekannt, die Zugmaschine zur Verbesserung mit einer Windleiteinrichtung auszurüsten, einem sogenannten Aero-Kit, der aus einem feststehenden Spoiler besteht, die sich rückseitig, d. h. dem Auflieger zugewandt, an das Fahrerhaus anschließen. Zur Höhenanpassung zum Auflieger können diese auch höhenverstellbar ausgebildet sein. Ein Beispiel dafür ist in der DE 10 2010 027 715 A1 beschrieben. Derartige Aero-Kits können die Situation jedoch nur in geringem Maße verbessern.

Aus der EP 1 870 320 A2 ist ein System zum vollständigen Schließen des Raumes zwischen der Kabine und einem Auflieger eines industriellen oder kommerziellen Fahrzeuges bekannt, das feste Abdeckungen aufweist, die an den seitlichen und oberen Kanten der Rückseite der Kabine angebracht sind. Zudem sind aufblasbare und einziehbare Abdeckungen vorgesehen, die an den festen Abdeckungen als dynamische Erweiterung dieser angebracht sind und dazu dienen, zur Spaltschließung aufgeblasen zu werden. In der Vorderwand des Aufliegers sind Gegenstücke vorgesehen, an denen Endstücke der aufblasbaren Abdeckungen anlegbar sind, wobei sich im Kontaktfalle diese bereichsweise überdecken.

Der mit der Spaltschließung einhergehende Aufwand in Gestalt der aufblasbaren Abdeckungen ist jedoch erheblich. Darüber hinaus sind die mit Anschlüssen und einer Druckluftversorgung zu versehenen aufblasbaren Abdeckungen störanfällig und können auch bei Kurvenfahrten eine Spaltabdichtung nicht sicher darstellen. Es ist daher Aufgabe der vorliegenden Erfindung, eine technische Lösung aufzuzeigen, um den Spalt zwischen einem Zugfahrzeug und dem Auflieger eines Sattelzuges auf ein Minimum zu reduzieren.

Zur Lösung dieser Aufgabe zeichnet sich der Sattelzug dadurch aus, dass der vordere Bereich des Aufliegers in seinem zumindest zentralen, die Längsachse des Aufliegers umfassenden Bereich eine kreissegmentbogenförmige gekrümmte Querschnittsgestalt im Schwenkbereich des Aufliegers hat.

Damit ist ein Sattelzug geschaffen, bei dem aufgrund vorgesehener Windleitelemente des Aufliegers, die von einem herkömmlichen Spoiler, der an dem Fahrerhaus des Sattelzuges angebracht ist, überlappt werden können, die Strömung, die an dem Sattelzug insgesamt vorbeiströmt, möglichst laminar gehalten werden kann. Auf der anderen Seite ist die Fahrzeugkombination so gestaltet, dass ein uneingeschränkter Bewegungsfreiraum sowohl in horizontaler Richtung für eine Kurvenfahrt als auch in vertikaler Richtung bei z. B. der Bergfahrt oder bei einer Rampenüberfahrt ermöglicht ist.

Die Positionierung der herkömmlichen Sattelkupplung zwischen Zugfahrzeug und Auflieger kann unverändert bleiben. Der Laderaum des Aufliegers kann annähernd unverändert bleiben. Je nach Größe des Sattelzuges und nach den durch diese Größe bestimmten Schwenkwinkeln ist die Vorderwand gekrümmt ausgebildet. Die gekrümmte Formgebung muss sich nicht über die gesamte Breite des Nutzfahrzeuges durch einen Kreissegmentbogen ergeben. Vielmehr kann sich die gekrümmte Formgebung in Abstimmung auf die jeweiligen Schwenkradien auch so ergeben, dass in einer Querschnittsebene mehrere Kreisbogenabschnitte realisiert sind. Auch können sich über die Höhe des Fahrzeuges jeweils Kreisbögen oder Kreisbögenabschnitte der vorgenannten Art ergeben, die sich unterscheiden. Die Aufliegerwindleitelemente können gegensinnig, d. h. zum Fahrerhaus ausgerichtet, zunächst gekrümmt und dann geradlinig ausgebildet sein. Damit kann der sich theoretisch noch ergebende Spalt nicht nur während der Geradeausfahrt sondern auch bei Kurvenfahrten oder Rampenüberfahrten bzw. Bergfahrten auf ein Minimum reduziert werden, wodurch sich der Gesamtluftwiderstand des Sattelzuges, also der Fahrzeugkombination, drastisch verbessern lässt. Ebenfalls können sich die Aufliegerwindelemente im Dachbereich des Aufliegers fortsetzen. Seitliche Aufliegerelemente und ein Windleitelement des Daches des Aufliegers können auch einstückig ausgebildet sein.

Weitere vorteilhafte Ausgestaltungen der Erfindung ergeben sich aus weiteren Unteransprüchen, der nachfolgenden Beschreibung und der Zeichnung. In der Zeichnung zeigen:
Fig. 1 eine räumliche Ansicht auf ein Ausführungsbeispiel eines erfindungs-gemäß gestalteten Aufliegers eines Sattelzuges mit seinen Aufliegerwindleitelementen ohne Darstellung des Zugfahrzeuges mit seinem Fahrerhaus in Geradeausstellung;
Fig. 2 das Ausführungsbeispiel nach Fig. 1 in einer Seitenansicht in Geradeausstellung, wobei das Fahrerhaus nicht sichtbar ist;
Fig. 3 eine Draufsicht auf das Ausführungsbeispiel nach den Fig. 1 und 2 in Geradeausstellung;
Fig. 4 eine räumliche Ansicht auf das Ausführungsbeispiel nach den Fig. 1 bis 3 über verschiedene horizontal geschwenkte Fahrzeugsituationen, Kurvenfahrt, und zwar in Fahrtrichtung rechts um einen Schwenkwinkel von 0° bis 28°, geschwenkt in 7°-Schritten mit jeweils einer Dar-stellung pro Winkelschritt überlagert dargestellt;
Fig. 5 eine zu Fig. 4 analoge Darstellung bei einer simulierten Rampenauffahrt mit einem Rampenwinkel von 0° bis 6° in 2°-Schritten mit jeweils einer Darstellung pro Winkelschritt überlagert dargestellt, und
Fig. 6 eine räumliche Ansicht analog zu den Fig. 4 und 5 bei simulierter Rampenabfahrt mit einem Rampenwinkel von -4° bis 0° in 2°-Schritten mit jeweils einer Darstellung pro Winkelschritt überlagert dargestellt.

In den figürlichen Darstellungen sind jeweils übereinstimmende Teile mit übereinstimmenden Bezugsziffern versehen.

In der Zeichnung ist der besseren Übersichtlichkeit wegen auf die Darstellung des gesamten Sattelzuges mit seinem Zugfahrzeug und seinem Fahrerhaus verzichtet worden. Das Fahrerhaus ist in seinem dem Auflieger 1 zugewandten Bereich, also seinem rückwärtigen Bereich, geradlinig ausgebildet. An das Führer- bzw. Fahrerhaus schließt sich ein Windleitelement 10 an, das höhenverstellbar ausgebildet sein kann in herkömmlicher Ausbildung. Die in der Zeichnung dargestellten Aufliegerwindleitelemente 2 werden je nach Stellung des Aufliegers 1 in seiner Relation zum Fahrerhaus mehr oder weniger von dem Windelement 10 überlappt, also jeweils abhängig davon, ob eine Geradeausfahrt durchgemacht wird oder Kurvenfahrten nach links und rechts bzw. Rampenauf- oder Rampenabfahrten.

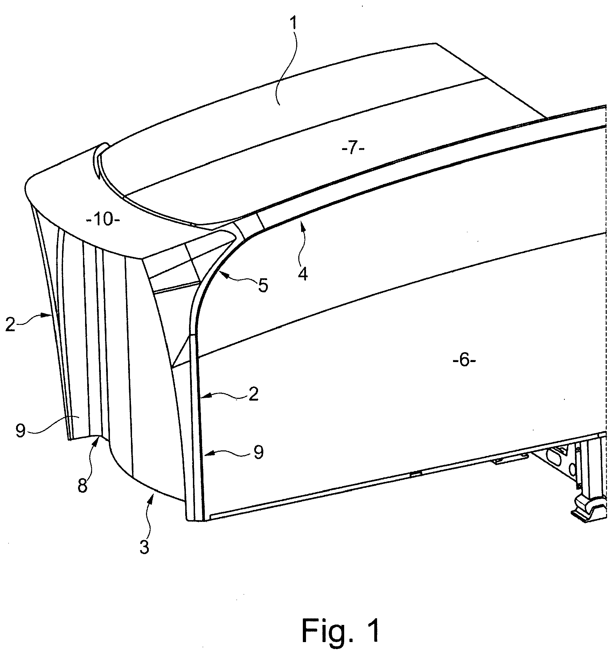

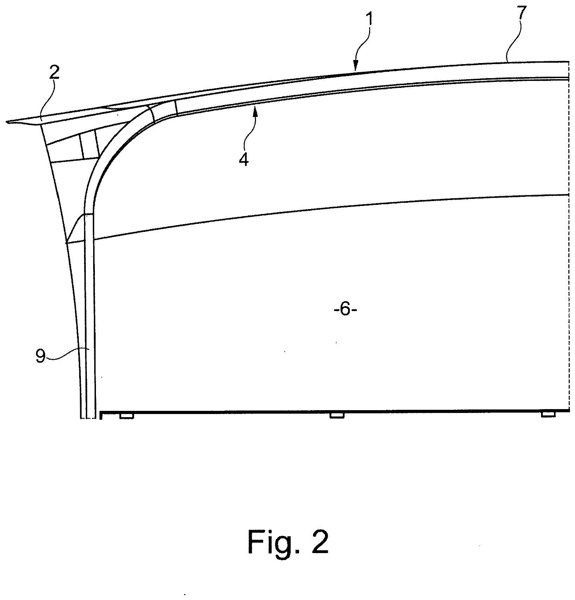

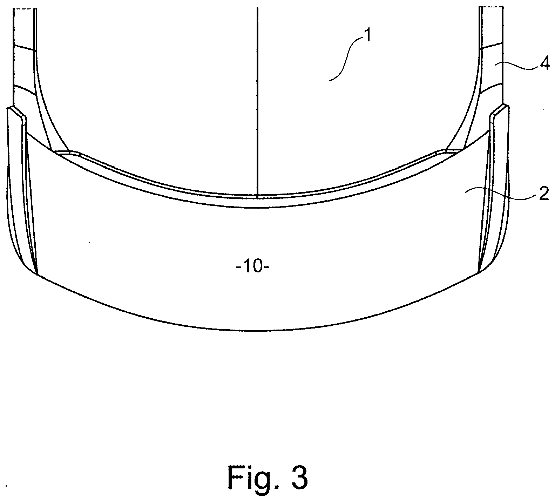

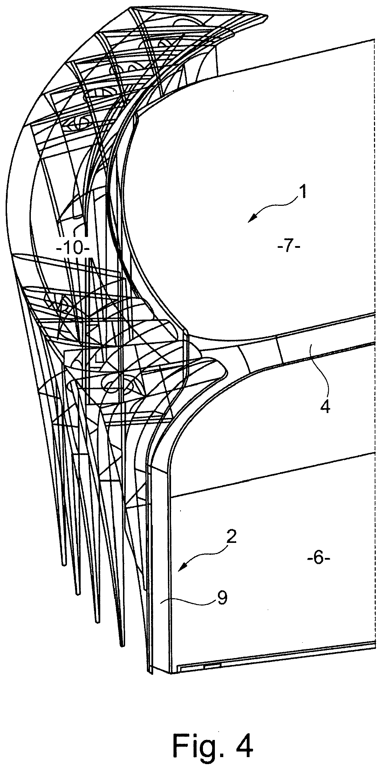

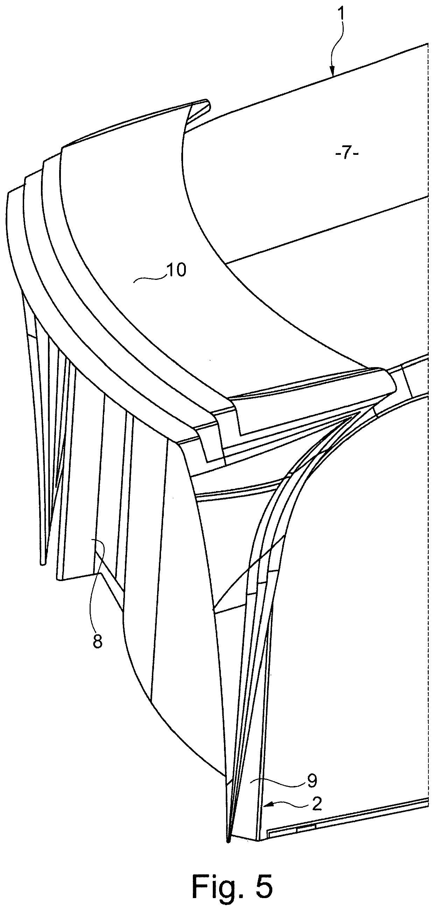

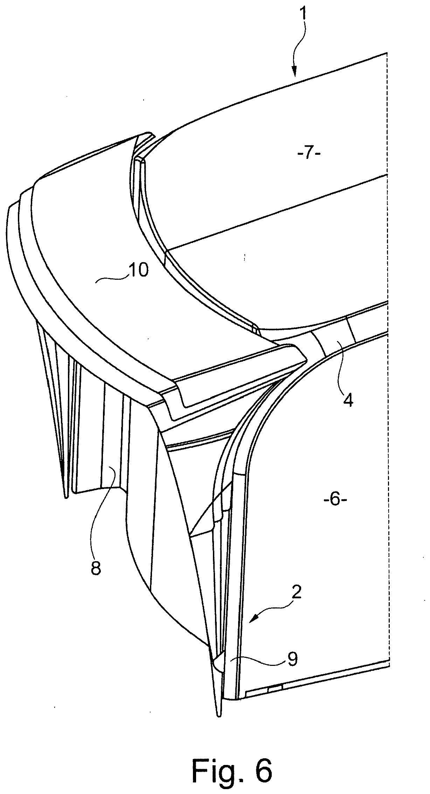

Der schon erwähnte Auflieger 1 ist in seinem vorderen Bereich 3 zum Fahrerhaus hin ausgerichtet im Querschnitt gekrümmt ausgebildet, wobei in den oberen Bereichen 4 und in den vorderen Eckbereichen sich eine abgerundete Struktur ergibt, um von den Längsseitenflächen 6 in den Dachbereich 7 überzugehen. Dieser gekrümmte Bereich hat im Wesentlichen die Gestalt eines Kreissegmentbogens, wobei sich pro Querschnittsebene, also in jeder der vielen Querschnittsebenen in der Vertikalen des vorderen Bereiches 3 sich auch einzelne Kreissegmentbogenabschnitte mit unterschiedlichen Radien darstellen lassen. In den Bereichen, die sich an den Längsseiten 6 anschließen, sind die Windleitelemente 2 jeweils mit zum Fahrerhaus hinausgerichteten gekrümmten Bereichen 8 ausgebildet, wobei der gekrümmte Bereich in einen zum Fahrerhaus hin ausgerichteten geradlinigen Bereich 9 übergeht, an den sich auch ein Dach 10 der Windleitelemente 2 anschließt, das wiederum das Dach 7 des Aufliegers fortsetzt und mithin ebenfalls geradlinig ausgebildet ist. Die Aufliegerwindleiteelemente 2 können auch einstückig ausgebildet sein. Die Fig. 2 bis 6 erläutern mit den jeweiligen Hinweisen, die bei der Auflistung der Figurenerläuterung vorstehend angegeben sind, die Darstellung nach Fig. 1.

## Patentansprüche

1. Sattelzug mit einer ein Fahrerhaus aufweisenden Zugmaschine und einem mit der Zugmaschine verbindbaren, einen Aufbau aufweisenden Auflieger (1), wobei zwischen dem Fahrerhaus und dem Auflieger eine Windleiteinrichtung vorgesehen ist, mittels welcher ein Zwischenraum zwischen dem Fahrerhaus der Zugmaschine des Sattelzuges und dem Auflieger des Sattelzuges zumindest bereichsweise abdeckbar ist, wobei der Auflieger (1) in seinem dem Fahrerhaus des Sattelzuges zugewandten vorderen Bereich (3) seine beiden Längsseiten (6) im wesentlichen fortsetzende Aufliegerwindleitelemente (2) aufweist, welche von einem Windleitelement des Fahrerhauses überlappt sind, **dadurch gekennzeichnet, dass** der vordere Bereich (3) des Aufliegers (1) in seinem zumindest zentralen, die Längsachse des Aufliegers (1) umfassenden Bereich eine kreissegmentbogenförmige gekrümmte Querschnittsgestalt im Schwenkbereich des Aufliegers hat.

2. Sattelzug nach Anspruch 1, **dadurch gekennzeichnet, dass** die Aufliegerwindleitelemente (2) eine zum Fahrerhaus hinausgerichtete gekrümmte Gestalt haben mit geradlinigen Enden (9).

3. Sattelzug nach einem der Ansprüche 1 bis 2, **dadurch gekennzeichnet, dass** die gekrümmte Gestaltung des vorderen Bereiches des Aufliegers (1) in einer Querschnittsebene mehrere und unterschiedliche Kreissegmentbögen hat.

4. Sattelzug nach einem der Ansprüche 1 bis 3, **dadurch gekennzeichnet, dass** der vordere Bereich des Aufliegers (1) in seiner vertikalen Erstreckung unterschiedliche Kreissegmentbogengestaltungen in den jeweiligen Querschnittsebenen aufweist.

5. Sattelzug nach einem der Ansprüche 1 bis 4, **dadurch gekennzeichnet, dass** der vordere Bereich des Aufliegers (1) in seinem Übergangsbereich zwischen dem vorderen Bereich und einem Dach abgerundet ausgebildet ist.

6. Sattelzug nach einem der Ansprüche 1 bis 5, **dadurch gekennzeichnet, dass** die Windleitelemente (2) des Aufliegers (1) zunächst gegensinnig zum vorderen Bereich gekrümmt ausgebildet sind und dann in einen geradlinigen Bereich übergehen.

7. Sattelzug nach einem der Ansprüche 1 bis 6, **dadurch gekennzeichnet, dass** der Kopfbereich des Aufliegerwindleitelementes (2) des Aufliegers (1) sich geradlinig an das Dach des Aufliegers (1) anschließt und in den Übergangsbereichen zu den jeweiligen Seitenflächen (6) abgerundet ausgebildet ist.

8. Sattelzug nach einem der Ansprüche 1 bis 7, **dadurch gekennzeichnet, dass** die Windleitelemente (2) einstückig ausgebildet sind.

9. Sattelzug nach einem der Ansprüche 1 bis 8, **dadurch gekennzeichnet, dass** die Aufliegerwindleitelemente Teil eines Nachrüstteils sind, die an die Vorderwand eines Aufliegers adaptierbar sind.

## Claims

1. Articulated lorry comprising a tractor having a driver cab and a semi-trailer (1) which can be connected to the tractor and has a structure, a wind deflecting device being provided between the driver cab and the semi-trailer, by means of which device a gap between the driver cab of the tractor of the articulated lorry and the semi-trailer of the articulated lorry can be covered at least in regions, the semi-trailer (1) having, in the front region (3) thereof facing the driver cab of the semi-trailer, the two longitudinal sides (6) thereof substantially projecting semi-trailer wind deflecting elements (2) which are overlapped by a wind deflecting element of the driver cab, **characterised in that** the front region (3) of the semi-trailer (1), in the region thereof that is at least central and comprises the longitudinal axis of the semi-trailer (1), has a circular-segment-arc-shaped, curved cross-sectional shape in the pivot region of the semi-trailer.

2. Articulated lorry according to claim 1, **characterised in that** the semi-trailer wind deflecting elements (2) have a shape that is curved, oriented outwards towards the driver cab and has rectilinear ends (9).

3. Articulated lorry according to either claim 1 or claim 2, **characterised in that** the curved configuration of the front region of the semi-trailer (1) has a plurality of different circular segment arcs in a cross-sectional plane.

4. Articulated lorry according to any of claims 1 to 3, **characterised in that** the front region of the semi-trailer (1) has, in the vertical extension thereof, different circular segment arc configurations in the respective cross-sectional planes.

5. Articulated lorry according to any of claims 1 to 4, **characterised in that** the front region of the semi-trailer (1) is designed to be rounded in the transition region thereof between the front region and a roof.

6. Articulated lorry according to any of claims 1 to 5, **characterised in that** the wind deflecting elements (2) of the semi-trailer (1) are initially designed to be curved in opposite directions to the front region and then transition into a rectilinear region.

7. Articulated lorry according to any of claims 1 to 6, **characterised in that** the head region of the semi-trailer wind deflecting element (2) of the semi-trailer (1) rectilinearly connects to the roof of the semi-trailer (1) and is designed to be rounded in the transition regions to the respective side surfaces (6).

8. Articulated lorry according to any of claims 1 to 7, **characterised in that** the wind deflecting elements (2) are formed as one piece.

9. Articulated lorry according to any of claims 1 to 8, **characterised in that** the semi-trailer wind deflecting elements are part of a retrofit part and are adaptable to the front wall of a semi-trailer.

## Revendications

1. Semi-remorque avec une machine de traction présentant une cabine de conduite et une remorque (1) présentant une carrosserie, reliable à la machine de traction, dans lequel un appareil déflecteur est prévu entre la cabine de conduite et la remorque, au moyen duquel un espace intermédiaire peut être recouvert au moins par endroits entre la cabine de conduite de la machine de traction du semi-remorque et la remorque du semi-remorque, dans lequel la remorque (1) présente dans sa zone (3) avant tournée vers la cabine de conduite du semi-remorque des déflecteurs de remorque (2) prolongeant sensiblement ses deux côtés longitudinaux (6) qui sont recouverts par un déflecteur de la cabine de conduite, **caractérisé en ce que** la zone (3) avant de la remorque (1) présente dans sa zone au moins centrale, comprenant l'axe longitudinal de la remorque (1), une forme de section transversale courbée en forme d'arc de segment de cercle dans la zone de pivotement de la remorque.

2. Semi-remorque selon la revendication 1, **caractérisé en ce que** les déflecteurs de remorque (2) présentent une forme courbée dirigée au-delà de la cabine de conduite avec des extrémités rectilignes (9).

3. Semi-remorque selon l'une quelconque des revendications 1 à 2, **caractérisé en ce que** la forme courbée de la zone avant de la remorque (1) présente dans un plan de section transversale plusieurs et différents arcs de segment de cercle.

4. Semi-remorque selon l'une quelconque des revendications 1 à 3, **caractérisé en ce que** la zone avant de la remorque (1) présente dans son étendue verticale différentes formes d'arc de segment de cercle dans les plans de section transversale respectifs.

5. Semi-remorque selon l'une quelconque des revendications 1 à 4, **caractérisé en ce que** la zone avant de la remorque (1) est réalisée de manière arrondie dans sa zone de transition entre la zone avant et un toit.

6. Semi-remorque selon l'une quelconque des revendications 1 à 5, **caractérisé en ce que** les déflecteurs (2) de la remorque (1) sont réalisés de manière courbée tout d'abord en sens inverse à la zone avant et passent alors dans une zone rectiligne.

7. Semi-remorque selon l'une quelconque des revendications 1 à 6, **caractérisé en ce que** la zone de tête du déflecteur de remorque (2) de la remorque (1) se raccorde de manière rectiligne au toit de la remorque (1) et est réalisée de manière arrondie dans les zones de transition aux surfaces latérales respectives (6).

8. Semi-remorque selon l'une quelconque des revendications 1 à 7, **caractérisé en ce que** les déflecteurs (2) sont réalisés d'un seul tenant.

9. Semi-remorque selon l'une quelconque des revendications 1 à 8, **caractérisé en ce que** les déflecteurs de remorque font partie d'une pièce d'équipement complémentaire, lesquels peuvent être adaptés à la paroi avant d'une remorque.
